# EUROPEAN PATENT APPLICATION

(11) **EP 4 572 000 A1**
(43) Date of publication of application: **18.06.2025**
(21) Application number: 23889161.8
(22) Date of filing: 08.11.2023
(51) Int. Cl.: H01M 50/593, H01M 50/107

(54) **BATTERY, AND BATTERY PACK AND VEHICLE COMPRISING SAME**

(30) Priority: 08.11.2022 KR 20220148247
(71) Applicant: LG Energy Solution, Ltd., Seoul 07335 (KR)
(72) Inventor: KANG, Bo-Hyun, Daejeon 34122 (KR); KIM, Do-Gyun, Daejeon 34122 (KR); JO, Min-Ki, Daejeon 34122 (KR); HWANGBO, Kwang-Su, Daejeon 34122 (KR); OH, Jeong-Seop, Daejeon 34122 (KR); LIM, Gu-Min, Daejeon 34122 (KR)
(74) Representative: Goddar, Heinz J.
(86) International application number: PCT/KR2023/017920
(87) International publication number: WO 2024/101903

(57) **Abstract**

Disclosed is a battery, which includes an electrode assembly; a battery housing having an open portion formed at one side and a closed portion formed at a side opposite to the open portion and configured to accommodate the electrode assembly through the open portion; and an insulator having a cover portion interposed between the closed portion and the electrode assembly and a side portion interposed between an outer circumference of the electrode assembly and a sidewall of the battery housing, the side portion having a stress relieving portion formed in a predetermined depth from an end thereof.

## Description

### TECHNICAL FIELD

The present disclosure relates to a battery, and a battery pack and a vehicle including the same.

The present application claims priority to Korean Patent Application No. 10-2022-0148247 filed on November 8, 2022 in the Republic of Korea, the disclosures of which are incorporated herein by reference.

### BACKGROUND ART

Secondary batteries that have ease of application according to product groups and have electrical characteristics such as high energy density are universally applied not only to portable devices, but also to electric vehicles (EVs) or hybrid electric vehicles (HEVs) driven by an electric drive source.

These secondary batteries are attracting attention as a new energy source for improving eco-friendliness and energy efficiency because they not only have the primary advantage of dramatically reducing the use of fossil fuels, but also do not generate any byproducts from the use of energy.

Types of secondary batteries currently widely used include lithium-ion batteries, lithium polymer batteries, nickel cadmium batteries, nickel hydrogen batteries, nickel zinc batteries, and the like. Such a unit secondary battery cell has an operating voltage of about 2.5 V to 4.5 V.

Therefore, if a higher output voltage is required, a battery pack is formed by connecting a plurality of battery cells in series. In addition, a battery pack may be formed by connecting a plurality of battery cells in parallel depending on the charging and discharging capacity required for the battery pack. Accordingly, the number of battery cells included in the battery pack and the type of electrical connection may be set in various ways depending on at least one of the required output voltage and charge/discharge capacity.

Meanwhile, as types of secondary battery cells, there are known cylindrical, prismatic, and pouch-type battery cells. In the case of a cylindrical battery cell, an insulating separator is interposed between the positive electrode and the negative electrode, and they are wound to form a jelly-roll type electrode assembly, and the jelly-roll type electrode assembly is inserted into the housing together with the electrolyte to form a battery.

Here, when the housing is connected to a negative electrode or a positive electrode (usually a negative electrode) to have a polarity, insulation is also required between the housing and the jelly-roll type electrode assembly.

Meanwhile, as cylindrical battery cells are recently applied to electric vehicles, the form factor of cylindrical battery cells is increasing. In other words, the diameter and height of cylindrical battery cells are increasing compared to conventional cylindrical battery cells with form factors such as 18650 and 21700. Increasing the form factor results in increased energy density, increased safety against thermal runaway, and improved cooling efficiency. Also, in the case of cylindrical battery cells with increased form factors, insulation between the housing and the jelly-roll type electrode assembly is becoming more important.

For insulation, it may be considered to apply an insulator configured to prevent unnecessary electrical contact between the electrode assembly and the housing. In order to prevent the insulator, which is provided to prevent unnecessary contact between the electrode assembly and the housing, from moving within the housing, the maximum size of the insulator may be configured to correspond to the inner diameter of the housing.

However, in this case, the process of inserting the insulator into the housing may not be smooth. In another aspect, when the insulator is inserted into the housing, its shape may be deformed, and the insulator may not perform its insulation function properly due to the damaged insulator portion.

### DISCLOSURE

### Technical Problem

The present disclosure is designed to solve the problems of the related art, and therefore the present disclosure is directed to providing a battery with a structure that may securely prevent unnecessary electrical contact between an electrode assembly and a housing.

In another aspect, the present disclosure is directed to allowing an insulator to be easily inserted into the housing in the process of inserting the insulator into the housing.

In still another aspect, the present disclosure is directed to preventing the insulator from being damaged during the process of inserting the insulator into the housing, in order to prevent unnecessary electrical contact between the electrode assembly and the housing from occurring through the damaged portion.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery, comprising: an electrode assembly; a battery housing having an open portion formed at one side and a closed portion formed at a side opposite to the open portion and configured to accommodate the electrode assembly through the open portion; and an insulator having a cover portion interposed between the closed portion and the electrode assembly and a side portion interposed between an outer circumference of the electrode assembly and a sidewall of the battery housing, the side portion having a stress relieving portion formed in a predetermined depth from an end thereof.

The stress relieving portion may be provided in plurality along a periphery of the side portion.

The stress relieving portion may have a structure notched to a predetermined depth from the end of the side portion.

A periphery of the end of the side portion may be discontinuous.

The stress relieving portion may have a structure cut to a predetermined depth from the end of the side portion.

A periphery of the end of the side portion may be continuous.

The insulator may have a maximum diameter larger than an inner diameter of the battery housing in a state where the insulator is not accommodated within the battery housing.

The insulator may have a maximum diameter at the end of the side portion.

The insulator may have a larger diameter at the end of the side portion than a diameter at a connection part between the cover portion and the side portion.

The insulator may be configured to have a gradually increasing diameter from a connection part between the side portion and the cover portion toward the end of the side portion.

The electrode assembly may have a first uncoated portion extending in a direction toward the closed portion.

The insulator may be configured so that the first uncoated portion is not exposed through the stress relieving portion formed at the side portion.

The battery may further comprise a first current collector electrically coupled to the electrode assembly and interposed between the electrode assembly and the closed portion.

The cover portion may be interposed between the current collector and the closed portion.

The battery may further comprise a battery terminal coupled with the first current collector through the closed portion.

The cover portion may have an insulator hole formed at a position corresponding to the battery terminal and a winding center hole of the electrode assembly.

In another aspect of the present disclosure, there is also provided a battery pack, comprising the battery according to the present disclosure.

In another aspect of the present disclosure, there is also provided a vehicle, comprising the battery pack according to the present disclosure.

### Advantageous Effects

According to one aspect of the present disclosure, unnecessary electrical contact between the electrode assembly and the housing may be reliably prevented.

According to another aspect of the present disclosure, in the process of inserting the insulator into the housing, the insulator may be easily inserted into the housing.

According to still another aspect of the present disclosure, in the process of inserting the insulator into the housing, it is possible to prevent the insulator from being damaged and causing unnecessary electrical contact between the electrode assembly and the housing through the damaged portion.

However, the beneficial effects that can be obtained through the present disclosure are not limited to the effects described above, and among the effects that can be obtained by the battery, the battery pack, and the vehicle of the present disclosure, other effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing an exemplary form of a battery according to the present disclosure.
FIG. 2 is a diagram showing the internal structure of an upper portion of the battery shown in FIG. 1.
FIG. 3 is a partial enlarged view of FIG. 2.
FIGS. 4 and 5 are diagrams showing an insulator according to an embodiment of the present disclosure.
FIG. 6 is a drawing to explain the problem when applying an insulator without a stress relieving portion, unlike the insulator of the present disclosure.
FIG. 7 is a diagram showing an insulator according to an embodiment of the present disclosure, which has a structure in which the shape of the stress relieving portion is different compared to the insulator shown in FIGS. 4 and 5.
FIGS. 8 and 9 are diagrams showing a cross section of the insulator of the present disclosure, to explain the change in diameter of the insulator.
FIG. 10 is a diagram to explain the positional relationship between the stress relieving portion formed on the insulator of the present disclosure and an uncoated portion of an electrode assembly.
FIG. 11 is a drawing showing an exemplary form of a current collector (first current collector) applied to the present disclosure.
FIG. 12 is a diagram showing the internal structure of a lower portion of the battery shown in FIG. 1.
FIG. 13 is a diagram showing a battery pack according to an embodiment of the present disclosure.
FIG. 14 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

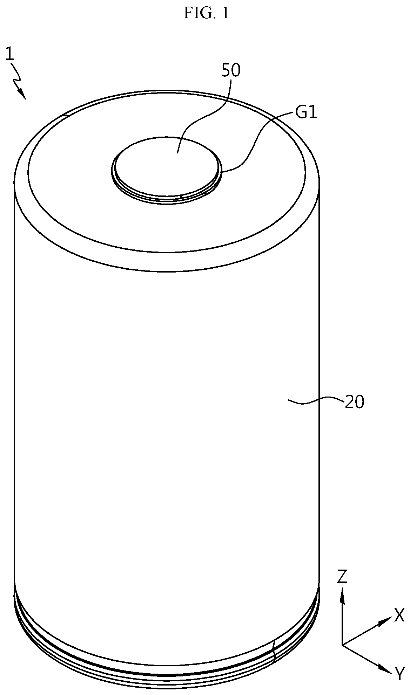

With reference to FIGS. 1 to 5, a battery 1 according to an embodiment of the present disclosure will be described.

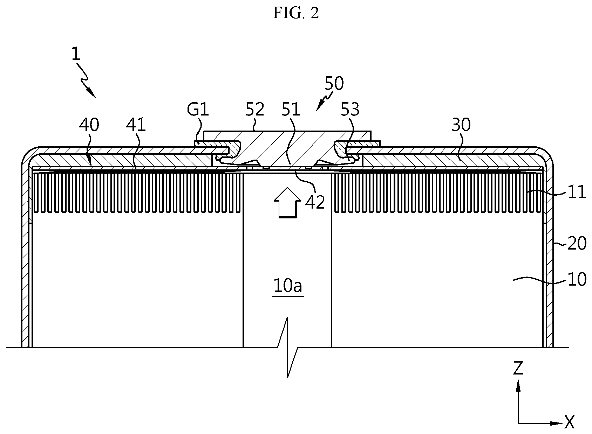

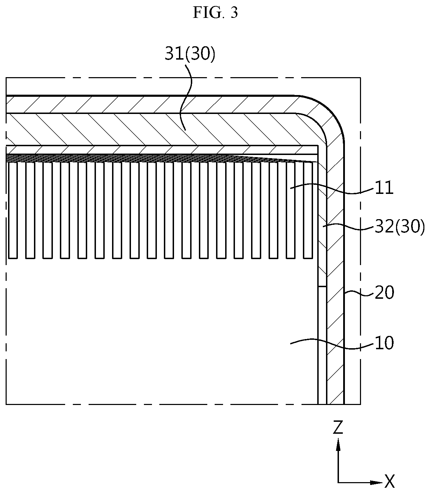

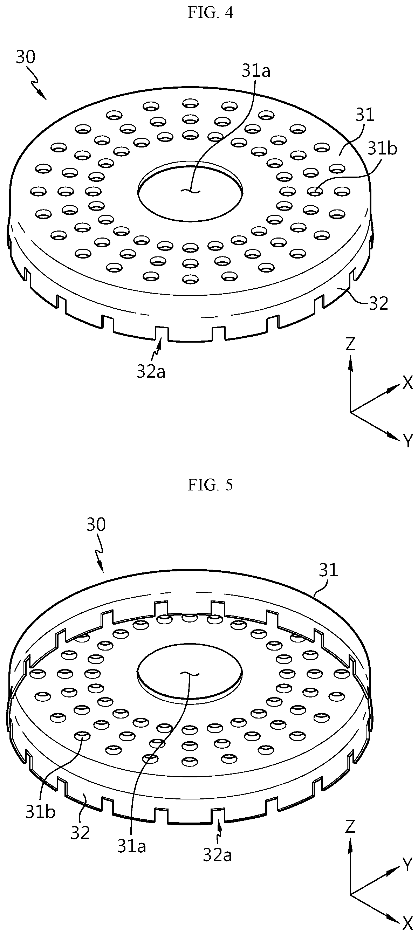

FIG. 1 is a perspective view showing an exemplary form of a battery according to the present disclosure, FIG. 2 is a diagram showing the internal structure of an upper portion of the battery shown in FIG. 1, and FIG. 3 is a partial enlarged view of FIG. 2. FIGS. 4 and 5 are diagrams showing an insulator according to an embodiment of the present disclosure.

First, referring to FIGS. 1 to 3, the battery 1 according to an embodiment of the present disclosure may include an electrode assembly 10, a housing 20, and an insulator 30. The battery 1 of the present disclosure may be, for example, a cylindrical battery.

The electrode assembly 10 may include a first electrode having a first polarity, a second electrode having a second polarity opposite to the first polarity, and a separator interposed between the first electrode and the second electrode. The electrode assembly 10 may have a stack including a first electrode, a second electrode, and a separator wound in one direction. That is, the electrode assembly 10 may be, for example, a jelly-roll type electrode assembly. When the electrode assembly 10 has a wound shape like this, a winding center hole 10a may be formed in the area that becomes a winding center.

The first electrode may include a first uncoated portion 11, which is an area in which the electrode active material is not applied. The first uncoated portion 11 may extend along the winding direction of the electrode assembly 10 at one end of the first electrode. Accordingly, the first uncoated portion 11 may be provided on a first surface approximately perpendicular to the outer circumference of the electrode assembly 10.

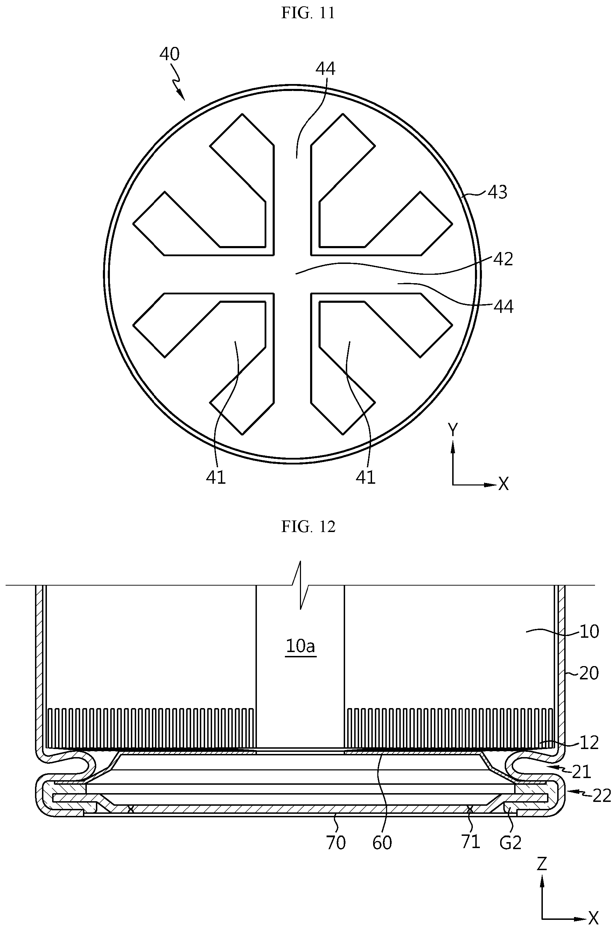

The second electrode may include a second uncoated portion 12, which is an area in which the electrode active material is not applied (see FIG. 12). The second uncoated portion 12 may extend along the winding direction of the electrode assembly 10 at one end of the second electrode. Accordingly, the second uncoated portion 12 may be provided on a second surface (a surface located at the side opposite to the first surface) approximately perpendicular to the outer circumference of the electrode assembly 10.

A separator may be located at the outermost side of the electrode assembly 10. The separator may be located on an inner wall of the winding center hole 10a.

Although not specifically shown in the drawing, the first uncoated portion 11 and/or the second uncoated portion 12 may include a plurality of segments formed by dividing the electrode assembly 10 along the winding direction. The segment may be formed by notching the first uncoated portion 11 and/or the second uncoated portion 12 to a predetermined depth. A plurality of segments may be bent along an approximately radial direction of the electrode assembly 10. In this case, some of the segments neighboring each other along the radial direction may overlap each other.

The battery housing 20 may include an open portion formed at one side and a closed portion formed at a side opposite to the open portion. The battery housing 20 may be configured to accommodate the electrode assembly 10 through the open portion. The battery housing 20 may include a conductive metal. The battery housing 20 may have a hollow, approximately cylindrical shape. The battery housing 20 may be electrically connected to, for example, the second electrode of the electrode assembly 10.

The insulator 30 may include a cover portion 31 and a side portion 32. The insulator 30 may prevent unnecessary electrical connection between the electrode assembly 10 and the battery housing 20. Considering this function, the insulator 30 may include a material with an insulating property.

The cover portion 31 may be interposed between the closed portion of the battery housing 20 and the electrode assembly 10. The cover portion 31 may be interposed between the closed portion of the battery housing 20 and the first uncoated portion 11 of the electrode assembly 10. The cover portion 31 may have an insulator hole 31a formed approximately at the center. The insulator hole 31a may be provided at a position corresponding to the winding center hole 10a of the electrode assembly 10. The insulator hole 31a may function as a passage for coupling the battery terminal 50 and the current collector 40 in the case where the battery 1 of the present disclosure is equipped with a battery terminal 50 and a current collector (first current collector) 40, explained later. The cover portion 31 may have an electrolyte hole 31b. The electrolyte hole 31b may be provided in plurality. The electrolyte hole 31b may function as a circulation passage that ensures smooth circulation of the electrolyte accommodated within the battery housing 20.

The side portion 32 may be interposed between the outer circumference of the electrode assembly 10 and the sidewall of the battery housing 20. The side portion 32 may extend from the periphery of an edge of the cover portion 31. The side portion 32 may extend in a direction toward the open portion of the battery housing 20. The cover portion 31 may have a substantially flat shape, and the side portion 32 may extend along a direction approximately perpendicular to the plane forming the cover portion 31.

The side portion 32 may include a stress relieving portion 32a formed in a predetermined depth from an end thereof. When the insulator 30 of the present disclosure has the stress relieving portion 32a, it is possible to prevent or minimize shape deformation of the insulator 30 caused by the stress applied to the periphery of the edge of the insulator 30 during the process of inserting the insulator 30 into the battery housing 20. If the insulator 30 is damaged or its shape is deformed due to the stress applied to the insulator 30 during the process of inserting the insulator 30 into the battery housing 20, the insulator 30 may not be able to properly perform its function as an insulator, which may cause quality deterioration and/or stability problems in the manufactured battery 1.

The stress relieving portion 32a may be provided in plurality along the periphery of the side portion 32. The plurality of stress relieving portions 32a may be positioned spaced apart from each other along the periphery of the side portion 32. The stress relieving portion 32a may have a structure notched to a predetermined depth from the end of the side portion 32. That is, the stress relieving portion 32a may have a groove shape indented to a predetermined depth from the end of the side portion 32. The periphery of the end of the side portion 32 may be discontinuous in the area where the stress relieving portion 32a is formed.

The shape of the area removed by the notching may be approximately trapezoidal as shown in the drawing of this application. However, in the side portion 32, the shape of the area removed by notching is not limited thereto, and notching may be performed in various shapes that may cause the periphery of the end of the side portion 32 to be discontinuous.

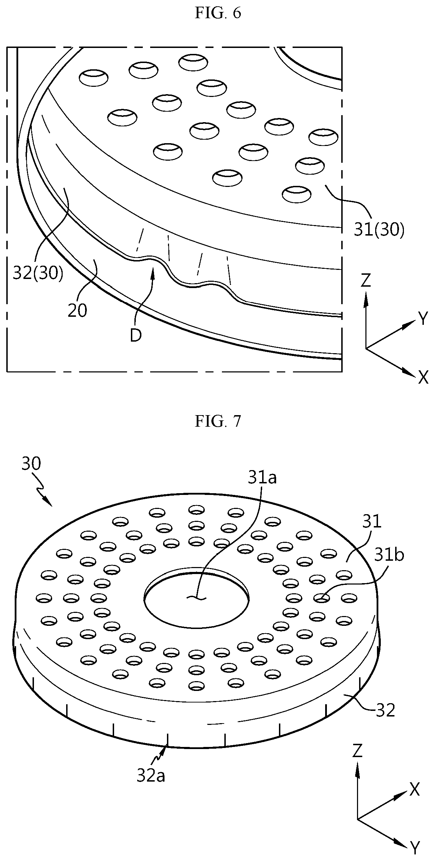

Through FIG. 6, the problem in the case where the stress relieving portion of the present disclosure is not formed in the insulator 30 may be understood.

FIG. 6 is a drawing to explain the problem when applying an insulator without a stress relieving portion, unlike the insulator of the present disclosure.

Referring to FIG. 6, if the insulator 30 in which the stress relieving portion 32a as in the insulator 30 of the present disclosure is not formed is inserted through the open portion of the battery housing 20, there may be generated an area D where the side portion 32 is crumpled due to the stress accumulated in the side portion 32. If the insulator 30 is deformed and/or damaged, the quality deterioration and/or safety problems may occur in the manufactured battery 1 as described above.

Next, with reference to FIG. 7, an insulator 30 having a different form from the insulator 30 of the present disclosure shown in FIGS. 4 and 5 will be described.

FIG. 7 is a diagram showing an insulator according to an embodiment of the present disclosure, which has a structure in which the shape of the stress relieving portion is different compared to the insulator shown in FIGS. 4 and 5.

Referring to FIG. 7, the stress relieving portion 32a formed in the insulator 30 of the present disclosure may have a structure cut to a predetermined depth from the end of the side portion 32. Specifically, the stress relieving portion 32a shown in FIG. 7 is not provided in the form of removing a partial area of the side portion 32 like the stress relieving portion 32a shown in FIGS. 4 and 5, but may be formed by cutting a partial area of the side portion 32.

Even when the stress relieving portion 32a is provided by forming a cut line to a predetermined depth from the end of the side portion 32, the stress applied to the side portion 32 in the process of inserting the insulator 30 into the battery housing 20 may be resolved through natural shape deformation at the cut area. The periphery of the end of the side portion 32 may be continuous in the area where the stress relieving portion 32a is formed. Here, the expression "continuous" does not mean that the side portion 32 has a smooth shape without cracks along the periphery of its end, but rather that the side portion 32 exists continuously without any removed area along the periphery of its end.

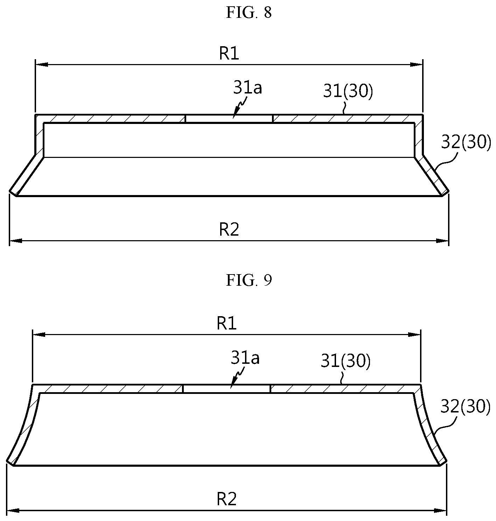

Next, the diameter of the insulator 30 according to an embodiment of the present disclosure will be described with reference to FIGS. 8 and 9 along with FIG. 2.

FIGS. 8 and 9 are diagrams showing a cross section of the insulator of the present disclosure, to explain the change in diameter of the insulator.

Referring to FIGS. 8 and 9 along with FIG. 2, the maximum diameter R2 of the insulator 30 in a state of being not accommodated in the battery housing 20 may be larger than the inner diameter of the battery housing 20. In the case where the maximum diameter R2 of the insulator 30 is larger than the inner diameter of the battery housing 20, the insulator 30 may be well fixed without moving within the battery housing 20 when the insulator 30 is inserted into the battery housing 20.

If the maximum diameter R2 of the insulator 30 is formed larger than the inner diameter of the battery housing 20 as above, stress may be applied to the insulator 30 when inserting the insulator 30 into the battery housing 20, but the stress may be resolved through the stress relieving portion 32a as described above.

Meanwhile, the insulator 30 of the present disclosure may be configured to have a maximum diameter R2 at the end of the side portion 32. The insulator 30 may be configured to have a maximum diameter at the end of the side portion 32. The insulator 30 may have a larger diameter at the end of the side portion R2 than the diameter R1 at the connection part between the cover portion 31 and the side portion 32. The side portion 32 may be configured to have approximately the same diameter R1 as the cover portion 31 in an area adjacent to the cover portion 31. The side portion 32 may be configured to have a gradually increasing diameter from a point spaced apart by a certain distance from the cover portion 31 toward the end. In contrast, the insulator 30 may be configured to have a gradually increasing diameter from the connection part between the side portion 32 and the cover portion 31 toward the end of the side portion 32.

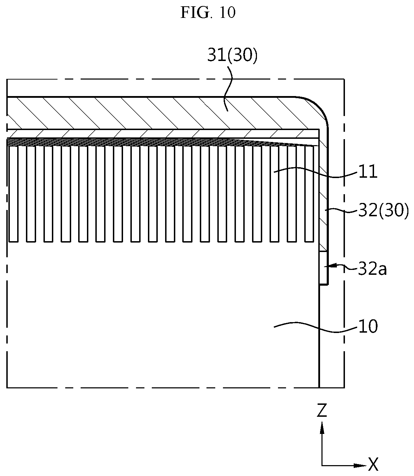

Next, referring to FIG. 10 along with FIG. 2, an exemplary positional relationship between the stress relieving portion 32a and the first uncoated portion 11 of the present disclosure will be described.

FIG. 10 is a diagram to explain the positional relationship between the stress relieving portion formed on the insulator of the present disclosure and an uncoated portion of an electrode assembly.

Referring to FIG. 10 along with FIG. 2, the electrode assembly 10 of the present disclosure may include a first uncoated portion 11, and the first uncoated portion 11 may extend in a direction toward the closed portion of the housing 20. At this time, the insulator 30 may be configured so that the first uncoated portion 11 is not exposed through the stress relieving portion 32a formed in the side portion 32. When the outer circumference of the electrode assembly 10 is observed in a state where the insulator 30 is coupled to the electrode assembly 10, the first uncoated portion 11 may not be exposed due to the stress relieving portion 32a of the insulator 30. That is, the depth of notching and/or cutting for forming the stress relieving portion 32a may be determined to a level at which the first uncoated portion 11 is not exposed through the stress relieving portion 32a.

If the depth of the stress relieving portion 32a is determined to a level at which the first uncoated portion 11 is not exposed as above, concerns about a decrease in insulation function due to the formation of the stress relieving portion 32a may be resolved.

Next, with reference to FIGS. 2 and 11, a case where the current collector 40 and/or the battery terminal 50 and/or the first gasket G1 is applied to the battery 1 of the present disclosure will be described.

FIG. 11 is a drawing showing an exemplary form of a current collector applied to the present disclosure.

Referring to FIGS. 2 and 11, the battery 1 according to an embodiment of the present disclosure may include a current collector 40 and/or a battery terminal 50 and/or a first gasket G1.

The current collector 40 may be configured to electrically connect the battery terminal 50 and the electrode assembly 10. The current collector 40 may be electrically coupled to the electrode assembly 10. The current collector 40 may be electrically connected to the first electrode of the electrode assembly 10. The current collector 40 may be coupled with the first uncoated portion 11 of the electrode assembly 10. If the battery 1 of the present disclosure includes the current collector 40 as above, the insulator 30 of the present disclosure may be interposed between the closed portion of the housing 20 and the current collector 40. The cover portion 31 of the insulator 30 may be interposed between the closed portion of the housing 20 and the current collector 40.

The current collector 40 may be disposed on the first surface of the electrode assembly 10. The current collector 40 may include a first coupling portion 41 and a second coupling portion 42. The first coupling portion 41 may be configured to be electrically coupled to the electrode assembly 10. The first coupling portion 41 may be coupled with the first uncoated portion 11 of the electrode assembly 10. The first coupling portion 41 may be coupled to a coupling surface formed by bending the first uncoated portion 11. At least a part of the first coupling portion 41 may be coupled with the first uncoated portion 11 in a region where the number of overlapping layers of segments of the first uncoated portion 11 is maximized.

The second coupling portion 42 may be electrically coupled to the battery terminal 50. The second coupling portion 42 may be electrically coupled to the first portion 51 of the battery terminal 50. The second coupling portion 42 may be welded to the first portion 51 of the battery terminal 50 by a welding tool inserted through the winding center hole 10a of the electrode assembly 10 or by a laser irradiated through the winding center hole 10a.

The current collector 40 of the present disclosure may have a structure in which the first coupling portion 41 and the second coupling portion 42 are spaced apart from each other along the radial direction. The current collector 40 may include a rim portion 43 located on the outer periphery of the first coupling portion 41 and the second coupling portion 42. The current collector 40 may include a connection portion 44 configured to connect the rim portion 43 and the second coupling portion 42. If the first coupling portion 41 and the second coupling portion 42 are not directly connected to each other but indirectly connected through the rim portion 43 as above, the impact applied to the battery 1 may be distributed. In other words, it is possible to minimize the impact applied to the welded portion of the first coupling portion 41 from being transmitted to the welded portion of the second coupling portion 42, and the it is also possible to minimize the impact applied to the welded portion of the second coupling portion 42 from being transmitted to the first coupling portion 41.

The battery terminal 50 may be configured to be electrically connected to the electrode assembly 10 through the closed portion provided at the side opposite to the open portion of the battery housing 20. The battery terminal 50 may be electrically connected to, for example, the first electrode of the electrode assembly 10. In this case, the battery terminal 50 may function as the first terminal of the battery 1. The battery terminal 50 and the battery housing 20 may have opposite polarities, and in this case, a first gasket G1 may be provided between the battery housing 20 and the battery terminal 50 to prevent contact between these components and ensure the airtightness of the battery housing 20.

The battery terminal 50 may include a first portion 51 and a second portion 52. The first portion 51 may be provided at a position corresponding to the winding center hole 10a of the electrode assembly 10. The second portion 52 may be exposed to the outside of the battery housing 20. The second portion 52 may be located approximately at the center of the closed portion of the battery housing 20. The battery terminal 50 may include a third portion 53 provided outside the first portion 51. The third portion 53 is riveted toward the closed portion of the battery housing 20 to fix the battery terminal 50 to the battery housing 20.

Meanwhile, if the battery 1 of the present disclosure includes a current collector 40 and a battery terminal 50 as above, the battery terminal 50 may be coupled with the current collector 40 through the closed portion of the battery housing 20. Also, the cover portion 31 of the insulator 30 may have an insulator hole 31a formed at a position corresponding to the battery terminal 50 and the winding center hole 10a of the electrode assembly 10.

Next, the structure of the lower portion of the battery 1 of the present disclosure will be described with reference to FIG. 12.

FIG. 12 is a diagram showing the internal structure of a lower portion of the battery shown in FIG. 1.

Referring to FIG. 12, the battery 1 according to an embodiment of the present disclosure may include a current collector (second current collector) 60. The current collector 60 may be configured to electrically connect the electrode assembly 10 and the battery housing 20. The current collector 60 may be electrically connected to the second electrode of the electrode assembly 10. The current collector 60 may be electrically coupled to the second uncoated portion 12 provided on the second surface of the electrode assembly 10. The current collector 60 may be electrically coupled to the inner surface of the battery housing 20. The current collector 60 may be electrically coupled to the beading portion 21 formed by press-fitting the periphery of the outer circumference of the battery housing 20.

The battery 1 may include a cap 70. The cap 70 may be configured to close the open portion of the battery housing 20. The cap 70 may be fixed by a crimping portion 22 that is configured to extend and bend from the beading portion 21 of the battery housing 20 and to surround the periphery of the edge of the cap 70. A second gasket G2 may be interposed between the cap 70 and the inner surface of the battery housing 20. The cap 70 may include a venting portion 71 that is configured to be weak compared to the remaining region. The venting portion 71 may be configured to partially reduce the thickness of the cap 70. The venting portion 71 may be configured to rupture when the internal pressure of the battery 1 increases and exceeds a predetermined pressure.

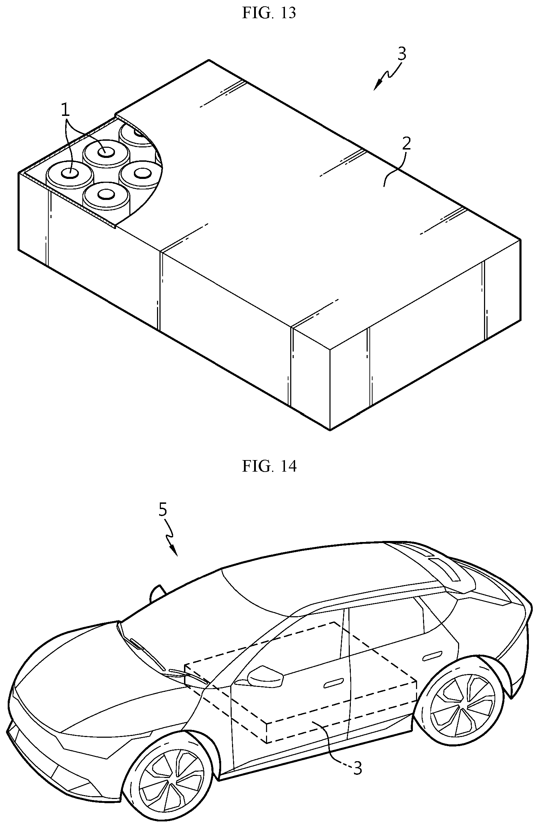

Next, with reference to FIG. 13, a battery pack 3 according to an embodiment of the present disclosure will be described.

FIG. 13 is a diagram showing a battery pack according to an embodiment of the present disclosure.

Referring to FIG. 13 along with FIG. 1, the battery pack 3 according to an embodiment of the present disclosure may include the battery 1 according to an embodiment of the present disclosure and a pack housing 2 for accommodating the battery 1. The battery 1 may be provided in plurality, and the plurality of batteries 1 may be electrically connected to each other. The battery 1 of the present disclosure may be configured so that the battery terminal 50 and the closed portion of the battery housing 20 may function as a first electrode terminal and a second electrode terminal, respectively. Therefore, when arranging the plurality of batteries 1 in the pack housing 2, electrical connection may be made at the top of the batteries 1 by arranging the battery terminals 50 of all batteries 1 to face upward.

Next, with reference to FIG. 14, a vehicle 5 according to an embodiment of the present disclosure will be described.

FIG. 14 is a drawing showing a vehicle according to an embodiment of the present disclosure.

Referring to FIG. 14, the vehicle 5 according to an embodiment of the present disclosure may include the battery pack 3 according to an embodiment of the present disclosure. The vehicle 5 may be configured to operate by receiving power from the battery pack 3. The vehicle 5 may be, for example, an electric vehicle or a hybrid electric vehicle.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

1: battery
2: pack housing
3: battery pack
5: vehicle
10: electrode assembly
10a: winding center hole
11: first uncoated portion
12: second uncoated portion
20: battery housing
21: beading portion
22: crimping portion (crimping portion)
30: insulator
31: cover portion
31a: insulator hole
31b: electrolyte hole
32a: electrolyte hole
32: side portion
32a: stress relieving portion
40: current collector (first current collector)
41 first coupling portion
42: second coupling portion
43: rim portion
44: connection portion
50: battery terminal
51: first portion
52: second portion
53: third portion
G1: first gasket
60: current collector (second current collector)
70: cap
G2: second gasket

## Claims

1. A battery, comprising:
an electrode assembly;
a battery housing having an open portion formed at one side and a closed portion formed at a side opposite to the open portion and configured to accommodate the electrode assembly through the open portion; and
an insulator having a cover portion interposed between the closed portion and the electrode assembly and a side portion interposed between an outer circumference of the electrode assembly and a sidewall of the battery housing, the side portion having a stress relieving portion formed in a predetermined depth from an end thereof.

2. The battery according to claim 1,
wherein the stress relieving portion is provided in plurality along a periphery of the side portion.

3. The battery according to claim 1,
wherein the stress relieving portion has a structure notched to a predetermined depth from the end of the side portion.

4. The battery according to claim 3,
wherein a periphery of the end of the side portion is discontinuous.

5. The battery according to claim 1,
wherein the stress relieving portion has a structure cut to a predetermined depth from the end of the side portion.

6. The battery according to claim 5,
wherein a periphery of the end of the side portion is continuous.

7. The battery according to claim 1,
wherein the insulator has a maximum diameter larger than an inner diameter of the battery housing in a state where the insulator is not accommodated within the battery housing.

8. The battery according to claim 7,
wherein the insulator has a maximum diameter at the end of the side portion.

9. The battery according to claim 8,
wherein the insulator has a larger diameter at the end of the side portion than a diameter at a connection part between the cover portion and the side portion.

10. The battery according to claim 8,
wherein the insulator is configured to have a gradually increasing diameter from a connection part between the side portion and the cover portion toward the end of the side portion.

11. The battery according to claim 1,
wherein the electrode assembly has a first uncoated portion extending in a direction toward the closed portion, and
wherein the insulator is configured so that the first uncoated portion is not exposed through the stress relieving portion formed at the side portion.

12. The battery according to claim 1, further comprising:
a first current collector electrically coupled to the electrode assembly and interposed between the electrode assembly and the closed portion,
wherein the cover portion is interposed between the current collector and the closed portion.

13. The battery according to claim 12, further comprising:
a battery terminal coupled with the first current collector through the closed portion,
wherein the cover portion has an insulator hole formed at a position corresponding to the battery terminal and a winding center hole of the electrode assembly.

14. A battery pack, comprising the battery according to any one of claims 1 to 13.

15. A vehicle, comprising the battery pack according to claim 14.
